# EUROPÄISCHE PATENTSCHRIFT

(11) **EP 4 648 004 B1**
(45) Veröffentlichungstag und Bekanntmachung des Hinweises auf die Patenterteilung: **12.08.2026**
(21) Anmeldenummer: 25174237.5
(22) Anmeldetag: 05.05.2025
(51) Int. Cl.: G06T 5/50

(54) **VERFAHREN UND EINE ANORDNUNG ZUM VERBESSERN EINER GEOMETRISCHEN AUFLÖSUNG VON FERNERKUNDUNGSDATEN**
METHOD AND ARRANGEMENT FOR IMPROVING A GEOMETRIC RESOLUTION OF REMOTE SENSING DATA
PROCÉDÉ ET DISPOSITIF POUR AMÉLIORER UNE RÉSOLUTION GÉOMÉTRIQUE DE DONNÉES DE TÉLÉDÉTECTION

(30) Priorität: 06.05.2024 DE 102024204223
(43) Veröffentlichungstag der Anmeldung: 12.11.2025
(73) Patentinhaber: Deutsches Zentrum für Luft- und Raumfahrt e.V., 53227 Bonn (DE)
(72) Erfinder: Borg, Erik, Bonn (DE); Bergerhoff, Leif, Bonn (DE)
(74) Vertreter: Brunotte, Joachim Wilhelm Eberhard

(56) Entgegenhaltungen:
- CN-A- 108 932 708
- CN-A- 110 675 318
- CN-A- 117 291 808
- CN-B- 113 627 292
- HUANFENG SHEN ET AL: "Coupling Model-Driven and Data-Driven Methods for Remote Sensing Image Restoration and Fusion", ARXIV.ORG, CORNELL UNIVERSITY LIBRARY, 201 OLIN LIBRARY CORNELL UNIVERSITY ITHACA, NY 14853, 13 August 2021 (2021-08-13), XP091033256

## Beschreibung

Die Erfindung betrifft ein Verfahren und eine Anordnung zum Verbessern einer geometrischen Auflösung von Fernerkundungsdaten, insbesondere Fernerkundungs-Bilddaten von Objekten an der Erdoberfläche und/oder der Atmosphäre, wobei die Bilddaten z. B. von Fernerkundungssatelliten, Flugzeugen oder anderen fliegenden Objekten (z.B. Ballone) aus gewonnen werden können.

Bei der Fernerkundung von Szenen, insbesondere der Erdoberfläche, werden u.a. optische/thermale Sensoren eingesetzt, die zu einem gegebenen Zeitpunkt einen kleinen Bereich der Oberfläche erfassen. Dabei empfangen sie von dem erfassten Oberflächenbereich reflektierte/emittierte Strahlung und erzeugen entsprechend ihrer Strahlungsempfindlichkeit Sensordaten. Diese können ausgewertet werden, um Informationen über den erfassten Bereich zu erhalten. Als Ergebnis der Messungen erhält man einen der Strahlungsintensität entsprechenden Intensitätswert oder ein Feld von Intensitätswerten, die jeweils einem anderen örtlichen Bereich der Szene zugeordnet sind. Optische / thermale Sensoren können insbesondere bildgebend (abbildend) sein, z.B. als Teil eines die Oberfläche scannenden Systems, das an einem Flugobjekt, zum Beispiel einem Flugzeug, montiert ist, und/oder eine Kamera zur gleichzeitigen Erfassung einer Vielzahl von Bildpunkten (insbesondere entsprechend den Strahlungsintensitäten der zugeordneten Oberflächenbereiche des Himmelskörpers) aufweisen. Bildgebende Sensoren liefern daher z.B. Werte der in einem erfassten Raumwinkelbereich über einen Spektralbereich integrierten empfangenen Strahlung, wobei die Werte z.B. als Grauwerte einer Grauwertskala darstellbar sind. Resultierende Bilder sind daher als Grauwertbilder darstellbar. Die Grauwerte können jedoch auch durch Farben kodiert dargestellt werden, so dass zum Beispiel jede Farbe einem Intensitätsbereich entspricht.

CN108 932 708 A betrifft die Datenverarbeitungstechnologie mit Fernerkundung, insbesondere ein raumgebundenes Multispektral-Fernerkundungsbildfusionsverfahren, das auf einer Superauflösungsverbesserung basiert.

CN 110 675 318 A betrifft ein Verfahren zur superauflösenden Rekonstruktion dünner Darstellungsbilder basierend auf der Trennung von Hauptstrukturen, um ein Bildsignal nahe am ursprünglichen reinen Signal zu rekonstruieren.

CN 113 627 292 B offenbart ein Verfahren und eine Vorrichtung zur Erkennung eines Fernerfassungsbilds auf der Basis eines Fusionsnetzwerks, wobei insbesondere das Fernerfassungsumwandlungsbild einem überlappenden Gitterschnitt unterzogen wird, um eine Vielzahl von Fernerfassungsschnittbildern zu erhalten.

Die Sensorauslegung unterliegt zum Teil technischer Limitierungen, so dass Sensoren nicht immer den Nutzerwünschen entsprechen. Das gilt vielfach für eine hohe geometrische Auflösung, die bei Nichtverfügbarkeit eine weitere Datenverarbeitung erschweren kann, d.h. der Nutzer wünscht sich oder benötigt eine höhere geometrische Auflösung.

Um die resultierenden Limitierungen auszuschließen bzw. zu minimieren, wurden Fusionsverfahren entwickelt, die Fernerkundungsdaten verschiedener Quellen kombinieren, um ein besseres Verständnis zu räumlichen und zeitlichen Mustern von Phänomenen und Prozessen zu gewinnen. Z. B. die Kombination von Multispektral- und panchromatischen Sensordaten findet bei vielen Fernerkundungsanwendungen statt, um eine hohe spektrale und hohe geometrische Auflösung zu erhalten. Insbesondere in Geologie, Land- und Landnutzungskartierung und/oder Aktualisierung von Karten, Landund Forstwirtschaft, werden die Daten für Anwendungen genutzt, die unter dem Begriff "change detection" subsummiert werden, oder auch das Monitoring von Naturkatastrophen.

In vielen Fällen ist es eine wesentliche Voraussetzung für die Fusion von Daten, dass diese zueinander kompatibel sind, so dass ein optimierter Datensatz gewonnen werden kann. Durch die Fusion von Fernerkundungsdaten mit Zusatzdaten können völlig neue Informationen erzeugt werden, wobei spezielle Methoden der Datenverarbeitung, -analyse und -interpretation erforderlich sind.

Ein vielfach genutztes Fusionsverfahren zur Verbesserung der geometrischen Auflösung von Fernerkundungsdaten ist das Pan-Sharpening. Dieser Ansatz fusioniert geometrisch hochaufgelöste panchromatische Daten mit geometrisch gering aufgelösten multispektralen Daten, um im Ergebnis räumlich und zeitlich hoch aufgelöste Daten zu gewinnen. Entsprechende Daten werden z.B. durch bereits existierende Fernerkundungssysteme routinemäßig aufgezeichnet.

Aufgrund der Vielzahl unterschiedlicher Begriffe für "Datenfusion" besteht die Notwendigkeit einer standardisierten Terminologie. Gebräuchliche Definitionen sind in der wissenschaftlichen Literatur zu finden. Vielen gemeinsam ist dabei die Klassifikation der Verfahren in die folgenden Verfahrens-Ebenen (Level) definiert: i) "Mess-Level" auf Pixelebene zur Verarbeitung von Grauwerten, "ii) Attribut-Level" auf der Grundlage identifizierter und extrahierter Objekte und iii) "Regel-basiertes Level" und "Entscheidungs-basiertes Level", auf der Grundlage klassifizierter Objekte in den Inputdaten. Es sind Pan-Sharpening-Verfahren verfügbar, die entsprechend der Dateneigenschaften sowie der jeweiligen Anwendung unterschiedliche Ergebnisse liefern können. Die Qualität der Fusionsergebnisse kann visuell oder quantitativ bewertet werden. Beispiele sind Brovey- und YIQ-Transformation,

Hauptkomponentenanalyse, gewichtete Fusion bzw. Verfahren, die aus einer Kombination verschiedener Techniken resultieren. Um Pan-Sharpening-Verfahren einer breiten wissenschaftlichen Nutzergemeinschaft zugänglich zu machen, sind u.a. in konventionellen Bildverarbeitungssystemen (z.B. ERDAS/IMAGINE; RSI/ENVI; PCI/Geomatica) entsprechende Verfahren und Methoden implementiert. Generell kann aber festgestellt werden, dass eine Reihe von Pan-Shrpening-Verfahren auf den folgenden Techniken beruhen:
1. Farbmodell-Transformation:
   - RGB-Farbkomposite,
   - Intensity-Hue-Saturation (IHS) Transformation,
2. Statistische oder arithmetische Transformation:
   - Arithmetische Bandkombination (z.B. Brovey transform, multiplicative model),
   - Principal Components Transformation,
   - Wavelet-Transformation (z.B. ARSIS Methode);
   - Regression Variable Substitution.
3. Kombinationen von Techniken;
4. Vorinformationsbasierte (Klassifikationsbasierte) Verfahren:
   - Multi-Sensor-Multi-Resolution Technik (MMT): Experimentelle Bereitstellung von räumlich hochaufgelösten Infrarotdaten für die Fernerkundung von NormalTemperatur-Phänomenen, wie z.B. Vegetationsstress, durch Verwendung der Multi-sensor Multi-Resolution Technik für Tagaufnahmen für den BIRD-Satelliten.
5. Energiebilanzierungsbasierte Transformation: EP 1 626 256 B1
6. KI (Künstliche Intelligenz)-basierte Verfahren;

Stand bei der Verbesserung der geometrischen Auflösung multispektraler Daten anfangs die Aufbereitung von Szenen zur visuellen Interpretation im Vordergrund, so sind zunehmend Verfahren von Interesse, die auf mathematisch-physikalischer Basis beruhen um Daten für eine weitere Verarbeitung bereitstellen zu können. Allerdings existieren technische Bedingungen im Rahmen der Satellitenfernerkundung, die mit den entwickelten Fusionsmethoden nicht oder nur zufriedenstellend bearbeitet werden können. Dabei handelt es sich um die folgenden Fälle: Mit Sensorpaketen bestückte Systeme, bei denen:
- geometrisch gering auflösende Sensoren eingesetzt werden, um große Schwadweiten zu realisieren (z.B. NOAA/AVHRR),
- geometrisch gering auflösende Sensoren eingesetzt werden, da die Sensitivität des Fernerkundungssensors zu gering ist,
- multi- und hyperspektrale Sensoren, die für einfallende Strahlung in einem schmalen Spektralbereich (Wellenlängenbereich) empfindlich sind, so dass der Sensor nur einen geringen Signalgewinn bei hoher geometrischer Auflösung hat und ein schlechtes Signal-Rauschverhältnis besteht,

Neben den oben genannten sensorgetriebenen Aspekten können Signalübertragungsaspekte für die Entwicklung von Fusionstechnologien eine Rolle spielen. Eine wesentliche Größe in der Kommunikations-/Informationstechnologie ist die Übertragungsgeschwindigkeit oder auch die Datenübertragungsrate, mit der eine bestimmte Datenmenge innerhalb eines bestimmten Zeitintervalls über einen Übertragungskanal übertragen werden kann. Übersteigt jedoch z. B. die zu übertragende Datenmenge die Kapazität eines Übertragungskanals, dann kann es zum Datenstau kommen. Werden allerdings höhere geometrische, spektrale und radiometrische Auflösungen bei gleichzeitig großer Schwadweite gewünscht, so kann die Datenübertragungskapazität eines Übertragungskanals relativ schnell an technische Grenzen stoßen. Damit erscheint eine Reduktion der zu übertragenden Datenmenge als mögliche Option, um insbesondere große Datenmengen zu übertragen.

Im Folgenden werden Erläuterungen zu verwendeten Begriffen gegeben:
Wird ein Signal mit einer Frequenz abgetastet, die nicht größer als die doppelte maximale Frequenz des Signals ist (Nyquist-Kriterium), ist eine anschließende verlustfreie Rekonstruktion des Signals nicht möglich. Die hierbei entstehenden Artefakte werden als Aliasing bezeichnet. Gemäß dem Nyquist-Shannon-Abtasttheorem gilt: Ein kontinuierliches, bandbegrenztes Signal mit einer Minimalfrequenz von 0 Hz und einer Maximalfrequenz muss mit einer Frequenz größer als die zweifache Maximalfrequenz abgetastet werden, damit aus dem zeitdiskreten Signal das Ursprungssignal ohne Informationsverlust rekonstruiert werden kann.

Fernerkundungssensor: Ein Sensor (auch als Detektor bezeichnet) ist ein technisches Bauteil bzw. technisches System, das bestimmte physikalische und/oder chemische Eigenschaften aufzeichnet bzw. Eigenschaften und/oder die stoffliche Beschaffenheit seiner Umgebung aus einer Entfernung zum Objekt qualitativ oder durch eine Messgröße quantitativ erfassen kann. Ein Sensor zur Aufzeichnung reflektierter/emittierter Strahlung wird durch Eigenschaften, wie geometrische, spektrale oder radiometrische Auflösung charakterisiert. Zur Fernerkundung werden insbesondere Sensoren zur Aufzeichnung reflektierter/emittierter Strahlung eingesetzt.

Optischer / elektronischer Splitter: Ein optischer / elektronischer Splitter ist ein technisches Bauteil bzw. technisches System, das den Weg der optischen Strahlungsausbreitung aufteilen kann. In Bezug auf die Gewinnung von Bildern kann ein solcher Splitter dazu verwendet werden, zwei oder mehrere Bilder zu erstellen.

Kontrolleinheit: Eine Kontrolleinheit ist ein technisches Bauteil bzw. technisches System, die den Status eines Fernerkundungssensors ermitteln, auswerten, notwendige Maßnahmen in Steuerbefehle umsetzen und mittels einer Kommunikationseinheit an Steuereinheiten übertragen kann. Insbesondere kann sie darüber hinaus über Kommunikationseinheiten Befehle oder Signale von der Bodenstation und den Satelliten bzw. den Flugkörpern empfangen, um diese ebenfalls auszuwerten, notwendige Maßnahmen in Steuerbefehle umzusetzen und an Steuereinheiten zu übertragen.

Steuerbefehle sind über Kabel, Funk- oder andere Übertragungswege übermittelte Signale bzw. Signalfolgen, mit denen Handlungsanweisungen an die Sensor-Systeme (z.B. zur Änderung der Position und Ausrichtung der Sensor-Systeme, zum An- und Abschalten der Sensoren) übertragen werden können.

Eine Steuereinheit ist ein technisches Bauteil bzw. technisches System, das Steuerbefehle von Kontrolleinheiten empfangen, auswerten und in Maßnahmen zur Konfiguration von Sensor-Systemen umsetzen kann.

Eine Kommunikationseinheit ist ein technisches Bauteil bzw. technisches System, das den Signal- und Datenaustauch zwischen Kontroll- und Steuereinheiten sowie Bodenstationen und Satelliten bzw. Flugkörpern realisiert.

Upscaling / Upsampling: Upscaling sind Verfahren, um die Qualität niedrig aufgelöster Daten zu verbessern. Methoden sind z.B.: i) Pixelwiederholung (Fehlende Pixel werden durch benachbarte Pixelwerte ergänzt, wobei die Bildqualität nicht gesteigert wird.), ii) logische Pixelergänzung (Fehlende Pixel werden durch "bilineare Intrapolation" berechnet, d.h. die Pixelwerte resultieren aus den Mittelwerten benachbarter Pixel, wobei der Datensatz geglättet und/oder unscharf wirkt.

Downscaling / Downsampling: Downscaling sind Verfahren zur Reduktion qualitativ hoch aufgelöster Daten, um gering aufgelöste Daten abzuleiten. Verfahren sind z.B.: i) bilineare, ii) bi-kubische, iii) Lanczos-Interpolation.

Der Reflexionsgrad besagt, wie viel Prozent bzw. welcher Anteil des auf eine Fläche fallenden Lichtstroms reflektiert werden / wird. Helle Flächen haben einen hohen Reflexionsgrad, dunkle Flächen einen niedrigen Reflexionsgrad. Der Reflexionsgrad kann insbesondere von der Frequenz der Strahlung und dem Winkel der einfallenden und dem Winkel der reflektierten Strahlung abhängen, d. h. damit variieren.

Ein Prozessmodul ist ein nicht mehr weiter untergliederbarer Arbeitsschritt (insbesondere als Programmteil), der für die Abarbeitung eines Arbeitsschrittes erforderlich ist.

Ein Prozessor ist eine mögliche Kombination von Prozessmodulen, um komplexere Verarbeitungsschritte zu ermöglichen bzw. abzuarbeiten.

Eine Prozessumgebung ist ein Framework, in das ein Prozessor eingebunden werden kann / muss, um mit anderen Prozessumgebungen Informationen und Daten austauschen zu können.

Eine Prozesskette ist eine Aneinanderreihung, Parallelschaltung von Prozessumgebungen, um fertige Informationsprodukte zu erstellen und optional automatisch zu erstellen. Dabei können noch interaktive Handlungen durch einen Operator erforderlich sein.

Super Resolution: Verfahren, die z. B. unter Nutzung von Up- und Downsampling-Techniken von einem oder mehreren niedrig aufgelösten Datensätzen den bzw. einen zunächst unbekannten und nach zuvor definierten Kriterien möglichen zugrundeliegenden hochaufgelösten Datensatz ableiten, werden unter dem Begriff Super Resolution zusammengefasst.

Informationsprodukte sind Informationsmittel, wie z.B. Charts, Karten, Entscheidungs- und Handlungsanweisungen. Informationsprodukte sind in einer numerisch und/oder grafisch beliebigen Form aufbereitete Informationen, die einem Anwender einen Informationswert oder Mehrwert bieten und/oder als Entscheidungsunterstützung / Grundlage dienen können.

Verschoben: Im weiteren Text wird der Begriff verschoben als Synonym für lineare und nichtlineare geometrische Transformationen zwischen den Ausgangs-Sätzen von Fernerkundungsdaten genutzt. Dies beschreibt einen Zustand, bei dem ein erster Datensatz auf zumindest einen zweiten Datensatz (insbesondere durch lineare oder nichtlineare geometrische Transformationen) projiziert werden kann.

Wie oben zu "Pan-Sharpening-Algorithmen" beschrieben, nutzen einige Fusionsverfahren farbraumbezogene Techniken, bei denen geometrisch unterschiedlich aufgelösten Ausgangsdaten verschiedene Farben zugewiesen oder in einen anderen Farbraum (z. B. IHS) transformiert werden. Die Auflösungsverbesserung erfolgt durch Austausch der Intensitätskomponenten und Rücktransformation in den ursprünglichen Farbraum. Die verbesserte geometrische Auflösung der Multispektraldaten ermöglicht eine i) bessere visuelle Interpretation und Identifikation von Merkmalen sowie eine höhere Genauigkeit der Landbedeckungs- und Landnutzungsklassifizierung. Allerdings werden durch diese Verfahren die Histogramme der Datensätze verändert, was eine quantitative Weiterverarbeitung erschwert. Häufig verwendete Verfahren sind die IHS-Technik (Intensity-Hue-Saturation), die Hauptkomponentenanalyse PCA (Principal Components Analysis), die sog. Brovey-Transformation und die Wavelet-basierte Bildfusion. Die IHS-und die Brovey-Transformation basieren auf der ungenauen Annahme, dass das panchromatische Bild eine Linearkombination der Frequenzbänder der spektralen Bilder ist. Dies führt zu signifikanter spektraler Verzerrung. Die PCA-Methode projiziert miteinander korrelierte Kanäle der spektralen Bilder in einen Satz von unkorrelierten Hauptkomponenten durch eine orthogonale Transformation, welche derart definiert ist, dass die erste Hauptkomponente die größte Varianz aufweist. Die Grauwertdifferenz zwischen der ersten Hauptkomponente und dem panchromatischen Bild verursacht signifikante Farbverzerrung. Die Wavelet-Fusion führt auch zu spektraler Verzerrung, da sie direkt die räumlichen Details des panchromatischen Bildes in die niedrig aufgelösten spektralen Bilder implementiert, welche eine unterschiedliche Grauwert-Verteilung aufweisen.

Eine weit verbreitete Fusionstechnik beruht auf der Hauptkomponentenzerlegung. Das Prinzip dieser Methode besteht darin, dass das geometrisch niedrig aufgelöste Ausgangsbild derart transformiert wird, dass ein Bestandteil (hier: die erste Hauptkomponente) weitgehend der (gegebenenfalls ebenso transformierten) Abbildung mit der höheren räumlichen Auflösung entspricht, was meist eine Anpassung der Bildstatistik erfordert. Anschließend werden die geometrisch niedrig aufgelöste Komponente durch die ihr entsprechende geometrisch hoch aufgelöste ersetzt und die inverse Transformation durchgeführt. Nachteil dieser Methode ist die vollständige Substitution einer Komponente, was zu einer Änderung der spektralen Charakteristik und somit zum Informationsverlust führt. Weiterhin geht durch dieses rein statistische Verfahren der Bezug zum physikalischen Messwert verloren, was die quantitative Auswertung erschwert.

Um den Informationsverlust infolge der Substitution von Komponenten zu minimieren oder zu vermeiden, transformieren einige Fusionsverfahren nur die zusätzliche räumliche Frequenzinformation. Diese wird durch Filterung oder "Multiresolution Representation", lokale Korrelationsmodelle, Wavelets sowie Filter ermittelt. Diese Methoden verursachen geringere Veränderungen der spektralen Charakteristik als die vorbenannten Methoden, wobei auch in diesem Fall der Zusammenhang zum physikalischen Messwert nicht immer gewährleistet ist. Weiterhin erfordern einige dieser Methoden, insb. das ARSIS-Konzept, die Anpassung der Methode an die verwendeten Sensoren.

Weitere Fusionsmethoden basieren auf abgeleiteten Werten des geometrisch hochaufgelösten Datensatzes als Basis für die Fusion, so z.B. basierend auf einer Klassifikation. Auch bei diesen Techniken wird, wenn auch nur minimal, die spektrale Information verändert. Im Gegensatz dazu ist das in der bereits erwähnten EP 1 626 256 B1 vorgeschlagene Verfahren physikalisch basiert, indem zwischen den multispektralen und den panchromatischen Daten eine Energiebilanz aufgestellt wird. Grundvoraussetzung dafür sind eine zeitgleiche Aufzeichnung der Daten und eine spektrale Überdeckung der multispektralen Daten durch die panchromatischen Daten. Werden diese Voraussetzungen nicht eingehalten, dann funktioniert das Verfahren nicht. Zusammenfassend kann festgestellt werden, dass die bisher vorgeschlagenen Verfahren oft nicht physikalisch basiert sind, und mehr oder weniger stark die spektrale Pixelcharakteristik verändern. Diese Veränderungen können zu Fehlern in der quantitativen Weiterverarbeitung führen. Die genannten Verfahren beruhen jedoch auf der Annahme, dass eine hohe geometrische Auflösung in mindestens einem Kanal / Band realisierbar wurde.

Es gibt allerdings Fälle, in denen eine hohe geometrische Auflösung technisch nicht / noch nicht realisierbar ist / werden kann.

Eine geringe geometrische Auflösung kann allerdings durch folgende Faktoren verursacht werden:
1. Die Sensitivität von Fernerkundungssensoren kann durch Faktoren, wie die Bewegung der Plattform, die spektrale Empfindlichkeit und Größe des Sensors und die Qualität der Optik beeinflusst werden. Ist die Sensitivität eines Sensors (Materialeigenschaften zur Detektion des Wellenlängenbereichs) zu gering, um ein ausreichendes Nutzsignal zu detektieren (Signal-Rausch-Verhältnis; engl.: Signal Noise Ratio SNR = Nutzsignalleistung/Rauschleistung), ist es erforderlich, eine größere Target-Flächengröße in einem Pixel abzutasten über die das Signal gewonnen werden kann. Daher ist bei einem geringen SNR eine große Fläche (grobe geometrische Auflösung) erforderlich, die ausreichend Energie reflektiert/emittiert, die empfangen werden kann, um den Sensor anzuregen und Daten (Nutzsignale) aufzuzeichnen. Ferner kann die von einem Target emittierte/reflektierte Energie für eine hohe geometrische Auflösung zu gering sein. Dann ist eine große Fläche erforderlich, um ein Signal messen zu können.
2. Die gewählte spektrale Auflösung eines Sensors (Multi- bzw. Hyperspektralsensor) ist sehr hoch gewählt. Die im beabsichtigten Band verfügbare Energie ist infolge der gewählten spektralen Auflösung gering. Eine hohe geometrische Auflösung ist daher unter Umständen technisch nicht möglich.
3. Der Sensor soll eine gewünschte große Schwadweite abdecken. Bei einer hohen geometrischen Auflösung steigt die Anzahl von Messelementen in einer Anzahl. Infolge dessen ist ein schnelles Auslesen der Bildelemente erforderlich, so dass hier technische Grenzen gesetzt sein könnten, die zur Wahl einer geringen geometrischen Auflösung zwingen.
4. Suchobjekte befinden sich im Subpixelbereich, beeinflussen aber der Datensatz, werden aber nicht aufgelöst.
5. Die radiometrische Auflösung des Datensatzes ist zu hoch.

Es wird eine technische Lösung für das Problem gesucht, bei Fernerkundungsdaten die geometrische Auflösung zu verbessern.

Es wird ein Vorschlag für eine Verbesserung der geometrischen Auflösung von Fernerkundungsdaten unterbreitet. Der Vorschlag geht von zumindest zwei Sätzen von Fernerkundungsdaten aus, durch die derselbe Erfassungsbereich, d.h. dieselbe Szene erfasst ist. Mit anderen Worten ergibt sich ein Überlappungsbereich, der von der Mehrzahl der Sätze von Fernerkundungsdaten erfasst ist. Insbesondere wird jeder der Sätze von Fernerkundungsdaten von einem zugeordneten Fernerkundungssensor oder einer zugeordneten Gruppe von Fernerkundungssensoren erzeugt oder ist erzeugt worden. Wie noch näher erläutert wird, kann unter Umständen bereits ein einziger physikalischer Sensor ausreichen, um die verschiedenen Sätze von Fernerkundungsdaten zu erzeugen. Dabei weist jeder der Sätze ein Raster auf, das seiner jeweiligen geometrischen Auflösung entspricht. Würden die Fernerkundungsdaten eines Satzes als Bild dargestellt, entspricht jedes Bildelement oder "Pixel" einem Element des Rasters. Anders ausgedrückt enthält jeder der Sätze für die Rasterelemente zumindest einen Erfassungswert, zum Beispiel einen Wert der in der Fläche des Rasterelements empfangenen elektromagnetischen Strahlung. Außer elektromagnetischer Strahlung kommt grundsätzlich auch andersartige Strahlung wie zum Beispiel Teilchenstrahlung infrage, auch wenn es sich in der Praxis in aller Regel um elektromagnetische Strahlung handelt.

In den genannten Ausgangs-Sätzen von Fernerkundungsdaten können die den Rasterelementen zugeordneten Werte als Erfassungswerte bezeichnet werden, weil die Werte auf einer Erfassung der erfassten Szene beruhen. Allgemeiner können die Werte als Funktionswerte bezeichnet werden, wobei es sich wie erwähnt in aller Regel um Werte handelt, die der Strahlungsflussdichte der mit dem Rasterelement erfassten elektromagnetischen Strahlung entsprechen. Dies schließt nicht aus, dass zumindest ein Satz von Fernerkundungsdaten zunächst weiterverarbeitet wird, bevor er wie im Folgenden beschrieben zur Verbesserung der geometrischen Auflösung herangezogen wird. Entsprechend der verwendeten Optik entspricht die Fläche eines Rasterelements einem Raumwinkel, in dem die mit dem Rasterelement erfasste elektromagnetische Strahlung einfällt. Benachbarte Rasterelemente desselben Rasters haben daher eine gemeinsame Grenze. An diesen Grenzen liegen die Ränder der Rasterelemente.

Die Raster der verschiedenen Sätze von Fernerkundungsdaten sind gegeneinander versetzt, d. h. Grenzen der Rasterelemente der verschiedenen Raster fallen nicht zusammen. Dadurch entsteht eine Vielzahl von Überlappungs-Teilbereichen der durch die verschiedenen Sätze von Fernerkundungsdaten erfassten Szene. Diese Überlappungs-Teilbereiche werden jeweils durch die Grenzen der Rasterelemente der verschiedenen Sätze von Fernerkundungsdaten definiert. Jeweils dort, wo sich eine Grenze der Rasterelemente eines der verschiedenen Sätze von Fernerkundungsdaten befindet, befindet sich auch eine Grenze von Überlappungs-Teilbereichen. In der Regel werden einander gegenüberliegende Grenzen eines konkreten Überlappungs-Teilbereichs durch Grenzen verschiedener Ausgangs-Sätze von Fernerkundungsdaten definiert. Abweichungen von dieser Regel können insbesondere an den Rändern des gesamten Überlappungsbereichs auftreten. Vorzugsweise sind die Rasterelemente der verschiedenen Ausgangs-Sätze von Fernerkundungsdaten gleich groß. Anders ausgedrückt ist die Rasterkonstante, der konstante Abstand zwischen aufeinanderfolgenden Grenzen der Rasterelemente, für die verschiedenen Raster gleich groß.

Die Überlappungs-Teilbereiche sind daher kleiner als die Rasterelemente der einzelnen Sätze. Es wird nun vorgeschlagen, die Überlappungs-Teilbereiche als Rasterelemente eines abgeleiteten Satzes von Fernerkundungsdaten aufzufassen, der aufgrund der kleineren Größe der Überlappungs-Teilbereiche eine gegenüber den einzelnen (Ausgangs-)Sätzen von Fernerkundungsdaten erhöhte geometrische Auflösung aufweist. Dabei wird den einzelnen Überlappungs-Teilbereichen jeweils ein Funktionswert zugeordnet, der aus den Funktionswerten der einander überlappenden Rasterelemente der Ausgangs-Sätze gebildet wird. Der gebildete Funktionswert liegt im Sonderfall von lediglich zwei Ausgangs-Sätzen zwischen den Funktionswerten der Ausgangs-Sätze in dem Überlappungs-Teilbereich. Allgemein liegt der Bildung des jeweiligen Funktionswerts des abgeleiteten Satzes von Fernerkundungsdaten der Gedanke zugrunde, dass er im Einklang mit den Funktionswerten der Ausgangs-Sätze sein muss.

Hinzu kommt die Überlegung, dass die in dem gesamten Überlappungsbereich einfallende Strahlungsleistung in den verschiedenen Sätzen von Fernerkundungsdaten gleich groß sein muss. Wenn daher die Funktionswerte der Überlappungs-Teilbereiche des abgeleiteten Satzes gebildet werden, muss ihr über den gesamten Überlappungsbereich gebildetes Flächenintegral der Funktionswerte gleich den Flächenintegralen der Ausgangs-Sätze sein. Anzumerken ist, dass die Dimension der Funktionswerte nicht unbedingt die einer Strahlungsflussdichte sein muss, sondern zum Beispiel auch die eines Reflexionsgrades sein kann. Allgemeiner ausgedrückt kann jede geeignete Größe verwendet werden, durch die sich die empfangene Strahlung ausdrücken lässt.

Insbesondere wird vorgeschlagen: Ein Verfahren zum Verbessern einer geometrischen Auflösung von Fernerkundungsdaten,
- wobei zumindest zwei Ausgangs-Sätze von Fernerkundungsdaten einer Szene empfangen werden oder vorliegen,
- wobei jeder der Ausgangs-Sätze Funktionswerte für zugeordnete Rasterelemente eines geometrischen Rasters einer Erfassung der Szene aufweist und wobei die Funktionswerte jeweils von der Szene ausgehender und in dem zugeordneten Rasterelement einfallender Strahlung entsprechen,
- wobei die geometrischen Raster der zumindest zwei Ausgangs-Sätze gegeneinander versetzt sind, sodass in einem Überlappungsbereich der geometrischen Raster der zumindest zwei Ausgangs-Sätze eine Vielzahl von Überlappungs-Teilbereichen gebildet ist, aus denen sich der Überlappungsbereich zusammensetzt, deren Grenzen jeweils durch Grenzen der Rasterelemente der zumindest zwei Ausgangs-Sätze definiert sind und deren geometrische Größe kleiner ist als die geometrische Größe der Rasterelemente der zumindest zwei Ausgangs-Sätze,
- für die Vielzahl von Überlappungs-Teilbereiche jeweils ein abgeleiteter Funktionswert gebildet wird, der aus den Funktionswerten derjenigen Rasterelemente der zumindest zwei Ausgangs-Sätze gebildet wird, deren Grenzen den jeweiligen Überlappungs-Teilbereich definieren,
- die abgeleiteten Funktionswerte derart gebildet werden, dass die folgende Bedingung erfüllt ist: ein Flächenintegral der abgeleiteten Funktionswerte über den Überlappungsbereich ist für jeden der Ausgangs-Sätze jeweils gleich einem Flächenintegral der Funktionswerte der Rasterelemente des Ausgangs-Satzes und
- ein abgeleiteter Satz von Fernerkundungsdaten ausgegeben wird, der durch die Überlappungs-Teilbereiche und die abgeleiteten Funktionswerte definiert ist.

Zum Umfang der Erfindung gehört ferner eine Anordnung zur Ausführung des Verfahrens. Die Anordnung weist insbesondere eine Bildungseinrichtung auf, die ausgestaltet ist für die Vielzahl von Überlappungs-Teilbereiche jeweils den abgeleiteten Funktionswert zu bilden.

Insbesondere wird ferner vorgeschlagen, wie im Anschluss an die Verbesserung der geometrischen Auflösung auch eine quantitative und computergestützte Auswertung durchgeführt werden kann.

Die Ausgabe des abgeleiteten Satzes von Fernerkundungsdaten kann auf unterschiedliche Weise erfolgen. Zum Beispiel kann dieser Satz lediglich abgespeichert werden. In diesem Fall erfolgt die Ausgabe an einen Datenspeicher oder einen verteilten Datenspeicher. Alternativ oder zusätzlich kann er zum Beispiel an eine Empfangseinrichtung übertragen werden, etwa an einen Computer oder Bildschirm.

Insbesondere entsprechen die Funktionswerte Strahldichten (Einheiten: W m ⁻² sr⁻¹ µm ⁻¹) oder äquivalenten Größen, im Gegensatz zu sonst üblicherweise genutzten Grauwerten. Dies ermöglicht die andernorts im Detail beschriebene Qualitätskontrolle auf Basis einer Bilanzierung der Energie und/oder Leistung. Die Messwerte der Sensoren können sich selbstverständlich mit fortschreitender Zeit ändern, sodass auch das Verfahren der Auflösungsverbesserung entsprechend mit fortschreitender Zeit wiederholt ausgeführt werden kann, zum Beispiel gemäß einem Zeittakt. Vorzugsweise werden die Sensoren für die Erfassung und Aufzeichnung der verschiedenen Ausgangs-Sätze von Fernerkundungsdaten wiederholt oder permanent interkalibriert. Im Fall der Verwendung eines einzigen Sensors, der die Szene beispielsweise scannend erfasst, kann die Interkalibrierung entfallen. Dies bedeutet insbesondere, dass sich in dem betrachteten Erfassungsbereich der Szene aus den verschiedenen Sätzen insgesamt dieselbe erfasste Strahlungsenergie bzw. Strahlungsleistung ergeben muss, um eine Energiebilanzierung bzw. Leistungsbilanzierung durchführen zu können.

In der Regel ist das beobachtete Gebiet (d.h. die Szene insbesondere auf der Erdoberfläche) keine ebene Fläche, weshalb es zu Reflexionen von Strahlung in unterschiedliche Richtungen kommen kann. Außerdem kann ein Teil der Strahlung, die auf den Messsensor fällt, zwischen dem beobachteten Gebiet und dem Messsensor reflektiert worden sein und quer zur Blickrichtung des Messsensors auf diesen auftreffen. Daher können optional im Rahmen der Energie-/Leistungsbilanz Werte (Abweichungen in der Energie zwischen den Bändern der Sensoren) für zumindest einen Zusatzkanal (geometrisch in der beabsichtigten geometrischen Auflösung des Ergebniskanals) berechnet werden und kann daher im Ergebnis für die Energieverteilung und Rekonstruktion im Subpixelbereich der Messkanäle genutzt werden. Z. B. gibt es Satelliten, die über keinen multispektralen Sensor im blauen Wellenlängenbereich des sichtbaren Lichts verfügen. Andererseits ist die Detektion von Strahlung im blauen Wellenlängenbereich zum Beispiel für die Detektionen von Aerosolen erforderlich. Der blaue Wellenlängenbereich kann daher z. B. durch einen Zusatzkanal berücksichtigt werden.

In jedem Fall wird es bevorzugt, dass die Funktionswerte der Ausgangs-Sätze in dem zugeordneten Rasterelement einfallender Strahlung in demselben Wellenlängenbereich der Strahlung entsprechen.

Durch die oben genannte Bedingung, die das genannte Flächenintegral beinhaltet, wird insbesondere eine physikalische Energiebilanzierung in dem im Folgenden beschriebenen Sinn durchgeführt. Alternativ kann die physikalische Energiebilanzierung in anderer Weise erzielt werden. Die physikalische Energiebilanzierung betrachtet die durch die Messdaten räumlich erfasste Strahlungsenergie, Strahlungsleistung oder einer äquivalenten Größe. Insbesondere kann für jeweils ein Pixel einer grob aufgelösten Pixel-Matrix dessen entsprechende Strahlungsenergie, Strahlungsleistung oder äquivalenten Größe betrachtet werden. Bei der physikalischen Energiebilanzierung wird gemäß der Erfindung zur Auflösungsverbesserung die Energie / Leistung über Subpixel (hier: die Überlappungs-Teilbereiche) verteilt, wobei jedoch keine Änderung der Energie / Leistung im Bereich des jeweiligen Pixels (hier: des jeweiligen Rasterelements) eintreten soll, d.h. es soll keine Energie / Leistung über die Grenzen des Pixels (Rasterelements) von diesem abgeführt oder in dieses hineingeführt werden. Vorzugsweise bleibt daher die Energie- / Leistungsbilanz nicht nur insgesamt für alle oder mehrere benachbarte Rasterelemente konstant, sondern soll für jedes einzelne Rasterelement des gröber aufgelösten Rasters-Matrix. Zumindest ist diese pixelweise / elementweise Erhaltung der Energie / Leistung ein Ziel. Wenn iterativ vorgegangen wird, kann sich die Strahlungsverteilung diesem Ziel mit fortschreitender Iteration annähern. Insbesondere eignet sich die physikalische Energiebilanzierung zur Qualitätsbewertung der veränderten Strahlungsverteilung.

Alternativ oder zusätzlich findet eine mathematische Energiebilanzierung statt: Im Zuge der mathematischen Optimierung ist es üblich eine zuvor definierte, problemspezifische, Energie zu minimieren. Diese muss in keinem direkten Zusammenhang zu einer physikalischen Größe stehen und ist ein Maß für die Abweichung von einer oder mehreren optimalen Lösungen des zugehörigen Problems. Ist keine analytische Lösung eines Problems möglich oder bekannt, kann eine Energieminimierung mittels numerischer Methoden erfolgen und auf diese Weise eine Annäherung an die bestmögliche Lösung gefunden werden.

Insbesondere gilt für eine Ausgestaltung, dass eine physikalische Energiebilanzierung mit dem Bilanzierungsziel durchgeführt wird, die abgeleiteten Funktionswerte derart zu bilden, dass gemäß dem abgeleiteten Satz von Fernerkundungsdaten in den geometrischen Bereichen der einzelnen Rasterelemente der geometrischen Raster aller Ausgangsdatensätze jeweils die gleiche Strahlungsenergie bzw. Strahlungsleistung auftrifft, wie gemäß dem jeweiligen Ausgangsdatensatz. D. h. aus dem jeweiligen geometrischen Bereich eines Rasterelements der Ausgangsdatensätze wird keine Energie / Leistung in benachbarte Bereiche verschoben. Dieses Ziel kann durch eine iterative Vorgehensweise bei der Bildung der abgeleiteten Funktionswerte angenähert werden und damit insbesondere gemäß einer Genauigkeitsvorgabe eingehalten werden. D.h. es werden iterativ nacheinander verschiedene Lösungen für einen geometrisch feiner aufgelösten Datensatz berechnet. Ein derartiges Super-Resolution Verfahren ermöglicht die Erhaltung der Strahlungsenergie.

Anders ausgedrückt gibt es in der Regel keine analytische Lösung für die Verteilung der Strahlungsenergie auf die neu erzeugten Überlappungs-Teilbereiche, d. h. auf das abgeleitete Raster mit geringerer Größe der Rasterelemente. An dieser Stelle anzumerken, dass es sich bei der Bilanzierung um eine Energie- bzw. Leistungsbilanzierung handeln kann. D.h., eine identische Fläche, die mit geometrisch gering oder hoch aufgelösten Pixeln überdeckt bzw. entsprechend erfasst wird, liefert den gleichen Energie- bzw. Leistungsbetrag, sofern die gleiche spektrale Charakteristik vorausgesetzt werden kann. Ferner wird dabei insbesondere davon ausgegangen, dass die Ausgangsdatensätze auf gleichzeitiger Erfassung der Szene beruhen, oder zumindest auf Strahlungsverhältnissen die für die verschiedenen Ausgangsdatensätze unverändert sind. Aufgrund der Tatsache, dass die Dimension einer Leistung die Dimension einer Energie pro Zeit ist, umfasst eine Leistungsbilanzierung jedoch auch eine Energiebilanzierung. Dies gilt jedenfalls für die häufig berechtigte Annahme, dass die Strahlungsleistung über den Erfassungszeitraum der Erfassung eines einzelnen Bildes der Szene in der Regel als zeitlich konstant betrachtet werden kann.

Eine Anordnung zur Durchführung des Verfahrens kann insbesondere zwei Systemteile aufweisen. Ein erster Teil kann aus einer Sensorhardware bestehen, die ein erstes (zum Beispiel optisches und/oder thermales) Fernerkundungs-Sensorsystem und ein zweites (zum Beispiel optisches und/oder thermales) Fernerkundungs-Sensorsystem umfasst. Wie bereits erwähnt gibt es jedoch auch Varianten, bei denen ein einziger Sensor zur Erzeugung der verschiedenen Ausgangs-Datensätze ausreicht. Das Hardwaresystem kann ferner einen Computer oder eine Computeranordnung, ein Speichersystem und einen Sender zur Datenübertragung aufweisen. Ein zweiter Teil kann Software aufweisen, die der Datenfusion der Daten des ersten Sensorsystems und der Daten des zweiten Sensorsystems dient. Diese Datenfusion erfolgt gemäß dem erfindungsgemäßen Verfahren in einer seiner Ausgestaltungen. Das Verfahren kann als physikalisch basiertes numerisches Verfahren zur Verbesserung der geometrischen Auflösung der gleichartigen Fernerkundungsdaten von den (zumindest) zwei Sensorsystemen bezeichnet werden. Insbesondere dient das System der automatischen Gewinnung physikalisch und/oder mathematisch begründeter geometrisch höher aufgelöster Fernerkundungsdaten, die optional in nachfolgenden quantitativen Auswerteverfahren weiterverarbeitet werden können.

Die Ausgangs-Sätze der Strahlungs-Fernerkundungsdaten erfassen von der Szene reflektierte und/oder emittierte Strahlung und weisen insbesondere die gleiche geometrische und die gleiche spektrale Auflösung auf. Insbesondere können die Fernerkundungsdaten der Ausgangs-Sätze zeitgleich erfasst und aufgezeichnet werden. Grundsätzlich ist jedoch auch ein geringer Zeitversatz bei der Erfassung und/oder Aufzeichnung bei den verschiedenen Ausgangs-Sätzen möglich. Wichtig ist, dass es sich noch um einen vergleichbaren Strahlungszustand der Szene handelt.

Die Hardwarekomponente kann die folgenden Elemente aufweisen: 1) Optik, 2) Optischer / elektronischer Splitter sowie 3) mindestens zwei (bzw. mehrere Detektoren) 4) Speicher zur Speicherung der Daten. Die Softwarekomponente kann die folgenden Module aufweisen: 1) Vorverarbeitung der Daten (z. B. Ableitung der Strahldichten), 2) mathematische Modellierung, 3) geometrische Energiebilanzierung, 4) Fusionierung sowie 5) Qualitätskontrolle.

Die verbesserte geometrische Auflösung kann erreicht werden, indem über eine insbesondere mathematische Bildmodellierung sowie über eine räumlich-geometrische Leistungs-/Energiebilanzierung zweier (oder mehrerer) geometrisch gegeneinander verschobener Datensätze insbesondere gleicher geometrischer und spektraler Auflösung eine die mathematische Verschneidung (Fusion) ermöglicht wird. Insbesondere können bezogen auf ein x-y-Koordinatensystem der Szene in x- und y-Richtung gegeneinander verschobene Ausgangs-Datensätze mit dem Ergebnis der verbesserten Auflösung fusioniert werden. Durch ein Kontroll- / Qualitätsmodul kann das Ergebnis sofern erforderlich adaptiv verbessert werden.

Hervorzuheben an der hier vorgeschlagenen Lösung sind:
1. Kombination/Fusion von Ausgangs-Datensätzen eines speziell konfigurierten Detektionssystems zur Aufzeichnung von Fernerkundungsdaten und eines darauf abgestimmten Auswertungssystems mit einem vollständig physikalisch-mathematisch begründeten Ansatz auf Basis einer Bilanzierung von Strahldichten (W m⁻² sr⁻¹ µm ⁻¹), nämlich einer Leistungs- und/oder Energiebilanzierung, zur geometrischen Verbesserung der Datensätze;
2. Nutzung geometrisch grobauflösender Daten ohne Einbeziehung von a) zusätzlichen, geometrisch höher aufgelösten Daten (wie Pan-Sharpening) oder einer b) Einführung mindestens eines virtuellen Kanals zur spektralen Energiebilanzierung für Fehl- und/oder Überlappungsbereiche von Spektralkanäle;
3. Die vorzugsweise zeitgleiche Erfassung und Aufzeichnung der Daten der Ausgangs-Sätze, die räumlich in der beabsichtigten geometrischen Auflösung, gegeneinander Verschoben sind und einen identischen Spektralbereich erfassen;
4. Die Ausführung eines Verfahrensschrittes (Qualitätskontrolle), z.B. durch Ausführung eines Computerprogramms, um mindestens physikalische Unstimmigkeiten in der Energiebilanz und/oder Leistungsbilanz zu identifizieren;
5. Die Nutzung der Qualitätskontrolle zur iterativen Verbesserung des Ergebnisses.

Ein wesentlicher Aspekt der satellitengestützten Fernerkundung ist neben der Datenaufnahme die Datenübertragung von der Satelliten-Sensor-Konfiguration zu einer Empfangsstation. Speziell für hochauflösende Fernerkundungsdaten, wie z. B. hyperspektrale Daten, werden (in der im Fachbereich üblicherweise verwendeten Terminologie) das X-Band oder Ka-Band genutzt. Im Ka-Band kann z. B. ein Datendurchsatz von größer als 70 Gbit/s erreicht werden. Die Datenaufzeichnung von hyperspektralen Daten erfordert hohe Übertragungsraten. Bei sehr schnellen Datenaufzeichnungen oder extrem großen Datenmengen kann es vorkommen, dass die Trägerfrequenz (z.B. X-Band) die erforderliche Übertragungsrate nicht gewährleisten kann. Im Falle der hyperspektralen Fernerkundung kann die Wahl einer hohen geometrischen Auflösung und einem großen Schwad die Leistungsgrenzen eines Datenübertragungskanals (S-Band, X-Band, Ka-Band) überschreiten. Eine technische Datenreduktion kann dann eine Lösung des Problems sein. Im Anschluss an diese Reduktion kann dann auf die Daten eine weitere Technik zur Datenkompression angewendet werden.

Das erfindungsgemäße Verfahren kann insbesondere durch ein Computerprogramm ausgeführt werden. In diesem Fall handelt es sich um ein computerimplementiertes Verfahren.

Ferner gehört zum Umfang der Erfindung eine Vorrichtung zur Datenverarbeitung, die Mittel aufweist zur Ausführung des Verfahrens, insbesondere des Verfahrens in einer der beschriebenen Ausgestaltungen.

Die Vorrichtung kann zum Beispiel aus einem einzigen Computer oder einem Computernetz bestehen oder den Computer bzw. das Computernetz aufweisen. Der Computer oder zumindest einer der Computer kann bezüglich seiner Arbeitsweise insbesondere ein Analogrechner, Digitalrechner und/oder ein Hybridrechner sein. Bezüglich seiner Größe und Bauart kann er ein Smartphone, ein Personal Digital Assistant (PDA), ein Tabletcomputer, ein eingebettetes System (z. B. in dem Steuerrechner eines Koordinatenmessgeräts eingebettet), ein Ein- oder Mehrplatinencomputer, ein Personal Computer (PC), ein Desktop-Computer, ein Arbeitsplatzrechner, ein in ein Computernetz eingebundener Hostrechner oder Server, ein Thin Client - Computer, ein Netbook, ein Notebook, ein Laptop, ein Mainframe-Computer oder ein Supercomputer sein, wobei manche der genannten Arten auch durch einen einzigen Computer realisiert werden können wie zum Beispiel ein PC mit mehreren Platinen. Ferner kann der Computer oder zumindest einer der Computer ein oder mehrere zentrale Verarbeitungseinheiten (CPU) und/oder pro CPU ein oder mehrere Rechenkerne aufweisen. Auch Grafikkarten oder auch andere dedizierte Karten mit Verarbeitungseinheiten, die Teil eines Computers sind, können ausschließlich oder in Kombination mit anderen Computern oder Verarbeitungseinheiten die Mittel zur Ausführung des Verfahrens darstellen.

Ferner ist darauf hinzuweisen, dass der Computer oder die Computer zwar vorzugsweise durch ein Computerprogramm zur Ausführung des Verfahrens veranlasst wird/werden, jedoch die Mittel zur Ausführung des Verfahrens zumindest auch eine durch Hardware realisierte, vorzugsweise programmierbare Anordnung (zum Beispiel eine Anordnung von Logik-Gattern) aufweisen können, wie beispielsweise ein ASIC (Application-Specific Integrated Circuit), ein PLD (Programmable Logic Device) oder ein FPGA (Field Programmable Gate Array).

Außerdem gehört zum Umfang der Erfindung ein Computerprogramm, aufweisend Befehle, die bei der Ausführung des Programms durch einen Computer diesen veranlassen, oder durch ein Computernetz dieses veranlassen, das Verfahren auszuführen, insbesondere das Verfahren in einer der beschriebenen Ausgestaltungen auszuführen.

Auch ein Datenträgersignal, das das Computerprogramm überträgt, und ein computerlesbares Medium gehören zum Umfang der Erfindung. Das computerlesbare Medium weist Befehle auf, die bei der Ausführung durch einen Computer diesen veranlassen, oder durch ein Computernetz dieses veranlassen, das Verfahren auszuführen, insbesondere das Verfahren in einer der beschriebenen Ausgestaltungen.

Das genannte Computernetz oder eines der genannten Computernetze kann ein lokales oder ein nichtlokales Netz oder eine Kombination davon sein. Insbesondere kann ein lokales Netz ein Body Area Network (BAN), ein Wireless Body Area Network (WBAN), ein Personal Area Network (PAN), ein Wireless Personal Area Network (WPAN), ein Local Area Network (LAN) oder ein Wireless LAN (WLAN) sein. Ein nichtlokales Netz kann insbesondere ein Metropolitan Area Network (MAN), ein Wide Area Network (WAN), ein Global Area Network (GAN), ein Virtual Private Network (VPN) oder Storage Area Network (SAN) sein.

Das computerlesbare Medium kann auch als Speichermedium bezeichnet werden und ist zum Beispiel ein digitales Medium wie eine Compact Disc (CD), eine Diskette, eine Digital Versatile Disc (DVD), eine Festplatte, eine Speicherkarte oder ein Massenspeicher, oder kann auch ein analoges computerlesbares Medium wie ein Text (der beispielsweise ein Ausdruck von Programmcode ist), ein Bild, eine Anordnung von Bildern oder ein analoger plattenförmiger oder scheibenförmiger Datenträger sein.

Ausführungsbeispiele der Erfindung werden nun unter Bezugnahme auf die beigefügte Zeichnung beschrieben. Die einzelnen Figuren der Zeichnung zeigen:
- Fig. 1: ein Ausführungsbeispiel für eine Anordnung zur Ausführung des erfindungsgemäßen Verfahrens,
- Fig. 2: ein Ausführungsbeispiel für eine Sensoranordnung mit zwei Sensoren, die von derselben Szene ausgehende Strahlung erfassen,
- Fig. 3: eine perspektivische Darstellung von zwei übereinanderliegend dargestellten Rastern, wobei angedeutet ist, welches örtlich feiner auflösende Raster daraus gebildet werden kann,
- Fig. 4: eine Draufsicht auf die in Fig. 3 dargestellte Anordnung, wobei für jeweils ein Rasterelement der gröber aufgelösten Raster angedeutet ist, welche vier Rasterelemente des feiner aufgelösten Rasters sich daraus ergeben können,
- Fig. 5: schematisch die Entstehung eines abgeleiteten Rasters aus den Rasterelementen von drei Ausgangs-Datensätzen.

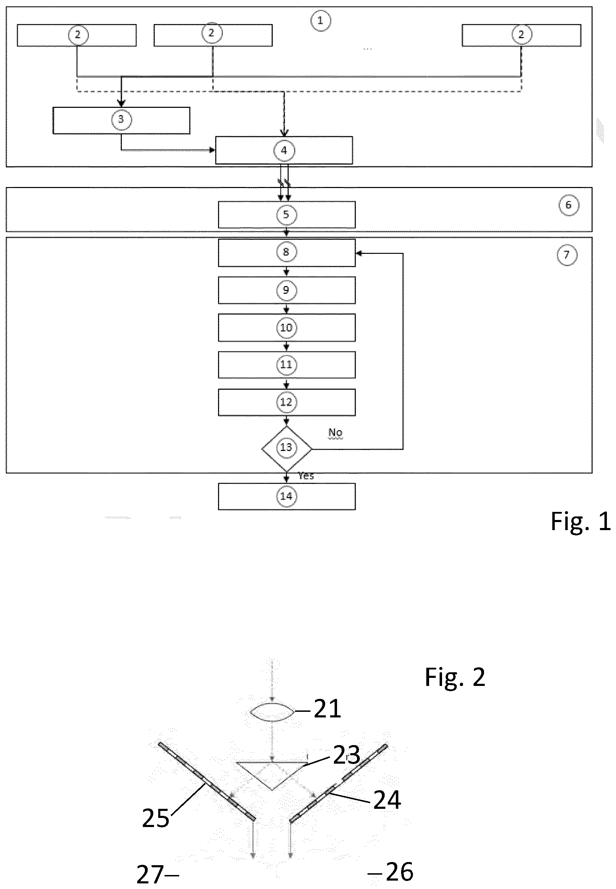

Fig. 1 zeigt eine Trägerplattform 1 mit einer Mehrzahl von Sensoren 2 gleicher Bauweise und insbesondere gleicher Baureihe. Mit den Sensoren 2 ist eine Interkalibrationseinrichtung 3 für die Sensoren 2 verbunden, die es ermöglicht, die Sensoren 2 in dem oben beschriebenen Sinn zu interkalibrieren. Die Trägerplattform 1 weist ferner einen Sender 4 zur Datenübertragung auf. Die von den Sensoren 2 erzeugten Sätze von Fernerkundungsdaten können während des Betriebes der Anordnung mittels des Senders 4 übertragen werden.

Ein Bodeneinheit 5, die als Zwischenprozessor aufgefasst werden kann, weist einen Empfänger 6 auf zum Datenempfang der von dem Sender 4 gesendeten Daten. Optional weist die Bodeneinheit 5 einen Zwischenspeicher auf, um die empfangenen Daten zwischen zu speichern. Im Sinne der oben stehenden Beschreibung der Erfindung handelt es sich bei den Daten um die Ausgangs-Datensätze der verschiedenen Sensoren 2.

Mit der Bodeneinheit 5 ist eine Prozessierungseinheit 7 verbunden, die Folgendes aufweist: Ein mathematisch-physikalisch basiertes Optimierungsmodul 8; ein Warpingmodul 9 für eine geometrische Co-Registrierung der Datensätze der unterschiedlichen Sensoren 2; ein Blurringmodul 10 zur Implementierung einer Point-Spread-Funktion, die vorzugsweise als Gauß-Filter ausgeführt ist; ein Downsamplingmodul 11; ein Qualitätsmodul 12 zur Ausführung eines Qualitäts- bzw. Konformitätstests und; ein Entscheidungsmodul 13. Mit dem Bezugszeichen 14 ist das Produkt bezeichnet, nämlich der geometrisch hoch aufgelöste Datensatz.

Die multisensorische Trägerplattform 1 trägt mindestens zwei Sensoren 2 gleicher Bauart, die entsprechend der beabsichtigten geometrischen Auflösung vorzugsweise geometrisch gegeneinander in x- und y-Richtung des x-y-Koordinatensystems der erfassten Szene um einen n-ten Teil der Rasterkonstante der Ausgangs-Datensätze verschoben sind. Im Fall von zum Beispiel drei Sensoren sind die Raster der einzelnen Datensätze daher um ein Drittel der Rasterkonstante gegeneinander verschoben. Alternativ zu den zumindest zwei Sensoren bzw. wenn aus einer Anzahl von Sensoren eine größere Anzahl von Datensätzen erzeugt werden soll, trägt die Plattform die Mittel, aus einem Sensor mehrere Datensätze zu erzeugen. Im Allgemeinen müssen die x-y-Koordinatensysteme der Ausgangs-Datensätze nicht in derselben Ebene im dreidimensionalen Raum liegen, solange diese mittels linearer oder nichtlinearer Projektion in das x-y-Koordinatensystem der erfassten Szene überführt werden können. Die Koordinatensysteme können daher z.B. auch in einer Richtung quer zu dem x-y-Koordinatensystems gegeneinander verschoben sein. Anders ausgedrückt handelt es sich dann jeweils um ein individuelles x-y-Koordinatensystem des jeweiligen Datensatzes. Wie an anderer Stelle erwähnt, müssen die x-y-Koordinatensysteme auch nicht exakt um einen n-ten Teil der Rasterkonstante der Ausgangs-Datensätze verschoben sein. Auch bei einer anderen Verschiebung lässt sich das erfindungsgemäße Verfahren entsprechend ausführen.

Fig. 2 zeigt ein konkretes Ausführungsbeispiel eines Sensorsystems. In der Darstellung von oben kommend fällt die Strahlung auf eine Optik 21 ein und wird durch die Optik 21 auf einen optischen Splitter 23 gelenkt, welcher die Strahlung aufsplittet. Die Strahlung trifft daher auf zwei verschiedene Detektorfelder 24, 25, die den verschiedenen Sensoren zugeordnet sind. Die so erzeugten Bilder der Detektorfelder 24, 25 werden in den Datenspeichern 26, 27 gespeichert und stehen zur Übertragung zur Verfügung. Der optische Splitter 23 und die Detektorfeld der 24, 25 sind so angeordnet, dass die gewünschte geometrische Verschiebung realisiert ist. Das Ausführungsbeispiel von Fig. 2 ist schematisch zu verstehen und es sind Abwandlungen möglich. Zum Beispiel kann statt des optischen Splitters 23 ein elektronischer Splitter verwendet werden.

Um die für die Verfeinerung der örtlichen Auflösung erforderlichen Daten bereitzustellen, kann z. B. eine der folgenden zwei Aufzeichnungsstrategien zur Anwendung kommen. Es handelt sich um eine Einsensor- und eine Mehrsensorkonfiguration. Im Fall der Einsensorkonfiguration (im Vorzugsfall ein Scanarray) wird ein einzelner Sensor genutzt, um die sich überlappenden Bilder zu erzeugen. Dazu muss die Aufnahmefrequenz des Sensors so hoch sein, dass ein Punkt auf der Planetenoberfläche zum Beispiel im Fall eines Satelliten in Flugrichtung in den räumlich gegeneinander verschobenen Rasterelementen der zeitlich aufeinander folgenden Satellitendaten mehrfach erfasst wird. Durch Schwenken des Sensors oder durch Kippen z.B. eines Spiegels oder Prismas kann dann eine Verschiebung orthogonal zur Flugrichtung erzeugt werden. Im Fall der Mehrsensorkonfiguration werden mehrere interkalibrierte Sensoren, vorzugsweise gleicher Bauweise, so in ihrer optischen Aufzeichnungsachse gegeneinander verschoben, dass die gegeneinander verschobenen Rasterelemente der von den Sensoren zeitgleich aufgezeichneten Daten eines definierten Punktes von einer Planetenoberfläche diesen um einen Versatz gegeneinander verschoben aufzeichnen. In beiden Fällen wird der in den sich überlagernden Rasterelementen erfasste Punkt einer Planetenoberfläche an jeweils einer um einen Versatz verschobenen Position erfasst.

Zurückkommend auf Fig. 1 haben die Daten der verschiedenen Sensoren 2 die gleiche geometrische Auflösung, die gleiche spektrale Bandbreite und spektrale Charakteristik sowie erfassen gleiche Teilbereiche mit der gleichen Strahlungsintensität. Als multisensorische Trägerplattform 1 können z.B. Drohnen, Flugzeuge, Satelliten, Ballone oder Raketen dienen. Die räumlich gering aufgelösten Ausgangs-Fernerkundungsdaten werden auf der Trägerplattform 1 zu dem Sender 4 geleitet und dort so verarbeitet, dass diese zwischen dem Sender 4 und dem Empfänger 6 über die Entfernung zur Bodeneinheit 5 übertragen werden können. Zudem werden Daten, gemessen mit der Interkalibrationseinrichtung 3 der Sensoren 2 aufgezeichnet, so dass eine sensorspezifische spektrale/radiometrische Korrektur der Daten vorgenommen werden kann. Auch diese Daten werden vom Sender 4 zum Empfänger 6 übertragen.

Nach dem Datenempfang durch den Empfänger 6 können die Daten zwischengespeichert werden. Die Daten werden an die Prozessierungseinheit 7 gesendet, wo für die aufgezeichneten grobaufgelösten Daten pixelweise (rasterlementweise) die Strahldichten (W m ⁻² sr⁻¹ µm ⁻¹) berechnet werden.

Der folgende Ansatz der physikalischen Modellierung setzt voraus, dass der scheinbare Reflektionsgrad des spektralen Bands eines ersten Sensors und der scheinbare Reflektionsgrad des spektralen Bands eines zweiten Sensors nach Gleichung (1) ermittelt wird: $ρ * = \frac{{πd}^{2} ⋅ L}{E ⋅ {cosθ}_{S}}$

Hierbei bezeichnen: ρ* scheinbarer Reflektionsgrad des ersten Sensors S1 des i-ten Kanals, d Erd-Sonne Distanz (in Astronomischen Einheiten AE), L gemessene Strahldichte (in W·m ⁻² ·sr⁻¹ µm ⁻¹), E solare Bestrahlungsstärke (W · m⁻²), Θₛ solarer Zenitwinkel (sr).

Sind für die gemessenen Bänder die Grauwerte bekannt, kann daraus jeweils die Strahldichte in Watt / (m^{2.} sr. µm) berechnet werden. Die Beziehung zwischen der gemessene Strahldichte L und einem Grauwert eines Pixels (DN, Digital Number) wird durch Gleichung 2 definiert: $L = {c}_{0} + {c}_{1} ∗ DN$

Dabei bedeuten DN (englisch: Digital Number) der Grauwert eines Pixels und *c*₀ und *c*₁ Regressionsparameter (gain und offset) (in W . m -2. sr -1. µm -1 ). Werden Gleichungen (1) und (2) zusammengeführt, folgt Gleichung (3) für die Ermittlung des scheinbaren Reflektionsgrads unter Nutzung der Grauwerte eines Datensatzes: $ρ * = \frac{{πd}^{2} \left({c}_{0}+{c}_{1}∗DN\right)}{E {cosθ}_{S}}$

Analog zu Gleichungen (1) und (3) können entsprechende Gleichungen für die multi- bzw. hyperspektralen Pixel (Rasterelemente) des zweiten Bands, die die Rasterelemente des ersten Bands überlagern, aufgestellt werden. Die aktuelle Distanz d zwischen Sonne und Erde kann genähert nach Gleichung (4) ermittelt werden: $d = 1 + 0 , 0167 sin \frac{π \left(Doy-93,5\right)}{Loy}$

Dabei bedeuten *Doy* "Day of Year" Tag im Jahr und *Loy* "Length of Year" Länge des Jahres, also 365 für nicht-Schaltjahre und 366 für Schaltjahre.

Neben der Vorverarbeitung verfügt die Prozessierungseinheit 7 über die Submodule 8, 9, 10, 11, 12, 13. Das Optimierungsmodul 8 dient der Lösung von Gleichungssystemen zur Berechnung der Bildenergie des hochaufgelösten Bildes. Voraussetzung für das Aufstellen einer physikalischen Energiebilanz zwischen den spektralen Pixeln (Rasterelementen) des ersten Bands und den spektralen Rasterelementen des zweiten Bands ist die Berechnung des Integrals für den scheinbaren Reflektionsgrad *ρ** der Rasterelementanteile des zweiten Bands, die das jeweilig betrachtete Rasterelement des ersten Bands ganz oder anteilig überdecken. Im einfachsten Fall kann das Integral durch den Mittelwert der überlagernden Anteile dargestellt werden.

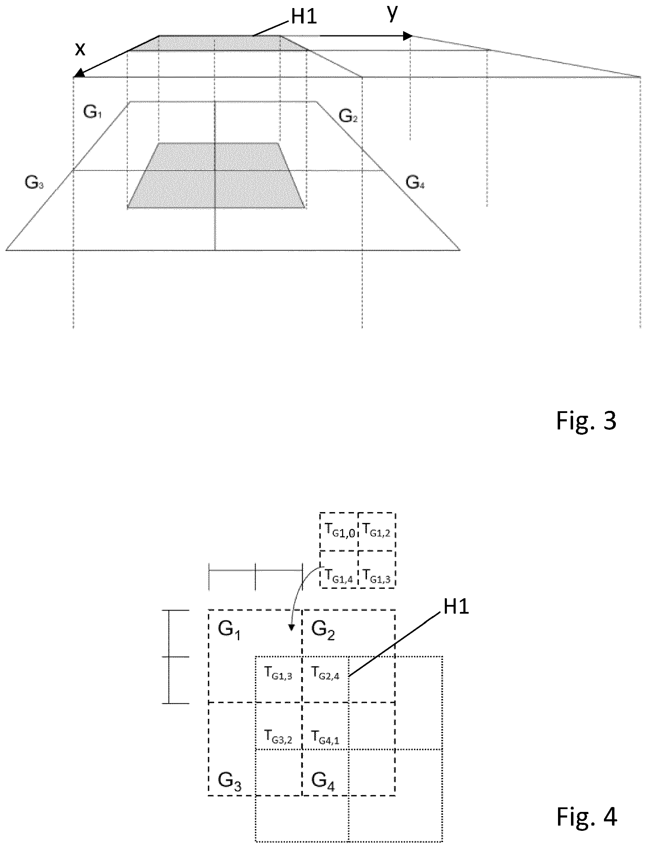

Damit kann entsprechend für Rasteranordnungen, wie die zum Beispiel in Fig. 3 bzw. Fig. 4 dargestellten, die Beziehung zwischen dem ersten Datensatz und dem zweiten Datensatz aufgestellt werden (Gleichung 5), so dass für den scheinbaren Reflektionsgrad *ρ** des Rasterelements des ersten Bands ein mittlerer scheinbarer Reflektionsgrad $\overline{{ρ}_{2}^{∗}}$ für ein virtuelles Rasterelement des zweiten Bands berechnet werden kann: $\overline{{ρ}_{2}^{∗}} = \frac{1}{m ⋅ m} {\sum }_{i = 1 , j = 1}^{m , m} {ρ}_{2 \left(i, j\right)}^{∗}$

Wird der gesamte Datensatz Band 2 mit einem gleitenden Fenster in gleicher Weise untersucht, dann kann ein dem Band 1 entsprechender virtueller Datensatz erstellt werden. Im Anschluss daran kann der berechnete mittlere scheinbare Reflektionsgrad $\overline{{ρ}_{2}^{∗}}$ des virtuellen Bands 2 mit dem scheinbaren Reflektionsgrad *ρ** des Bands 1 verglichen werden. Unter Nutzung des Mittelwerts kann dann eine Gewichtungsmatrix für das gesamte Band 1 berechnet werden. Die einzelnen Gewichtungsfaktoren für die Pixel des ersten Bands können nach Gleichung (6) berechnet werden. ${w}_{i , j} = \frac{{ρ}_{2}^{∗} \left(i, j\right)}{{ρ}_{1}^{∗}}$

Analog dazu kann dieser Arbeitsschritt in umgekehrter Weise auch für das Band 2 mit Bezug zu den die Rasterelemente des Bands 2 überlagernden Teil-Rasterelemente des Bands 1 durchgeführt werden, so dass ein virtuelles Band 1 zur Berechnung einer Gewichtungsmatrix für das gesamte Band 2 ermittelt werden kann.

Wie bereits erwähnt, ist die lokale Energie *Eₗ* eines Rasterelements über die Fläche in jedem Band eine unveränderliche Größe, die auch einzuhalten ist, wenn diese Fläche sich aus kleineren Teilflächen zusammensetzt. Verändert sich die lokale Energie *Eₗ* nach der Nachbarschaftsanalyse um einen Beitrag *ΔEₗ,* dann ist ein Korrekturfaktor *kₗ* nach Gleichung (7) zu berechnen: ${k}_{l} \left(k\right) = \frac{{E}_{l} \left(k\right) + Δ {E}_{l} \left(k\right)}{{E}_{l} \left(k\right)} für alle 1 \leq k \leq n + 1 ,$ der auf alle entsprechenden lokalen Teilbeiträge E(i,j,k) mit 1 ≤ i, j ≤ m im jeweiligen spektralen Band k entsprechend Gleichung (8) anzuwenden ist. ${E}_{l} \left(i, j, k\right) = \frac{E \left(i, j, k\right)}{{k}_{l} \left(k\right)} für alle 1 \leq k \leq n + 1 ,$

Des Weiteren verfügt die Prozessierungseinheit 7 über das Downsamplingmodul 11 zur Vergröberung der gewonnenen geometrisch hoher aufgelösten Ergebnisse aus dem Optimierungsmodul 8. Die Ergebnisse der Verarbeitung durch die Module 8, 9, 10 werden an das Downsamplingmodul 11 übertragen. Dazu werden die Ergebnisse in die geometrische Ausgangsauflösung der Eingangsdaten rückgeführt und dem Qualitätsmodul 12 zur Verfügung gestellt, um die Datenqualitätsüberprüfung hinsichtlich der physikalischen Übereinstimmung durchzuführen. Die Qualitätsergebnisse werden dann dem Entscheidungsmodul 13 zur Verfügung gestellt, das entscheidet, welcher Datensatz als Ausgangsdatensatz bereitgestellt wird. Dadurch kann bei Nichterreichen eines Qualitätszustands der Ergebnisse der Verfeinerung der örtlichen Auflösung ein weiterer Iterationsschritt durchgeführt werden. Wird das Ergebnis als qualitativ akzeptabel bewertet, so ist das Ergebnis und somit das "Produkt" ein geometrisch hoch aufgelöster Datensatz 14. Im Entscheidungsmodul 13 wird der optimierte Datensatz nach verringerter geometrischer Auflösung anhand des Ausgangsdatensatzes geprüft, um zu entscheiden, ob eine weitere Optimierung erforderlich ist oder der Prozess als abgeschlossen betrachtet werden kann. Ist der Vorgang abgeschlossen, wird das Produkt 14 als geometrisch hoch aufgelöster Datensatz zurückgegeben.

Fig. 3 und Fig. 4 zeigen jeweils zwei räumlich gegeneinander verschobene Raster. In Fig. 3 ist ein erstes Raster oberhalb eines zweiten Rasters dargestellt. Die Darstellung der beiden Raster in jeweils einer von zwei übereinanderliegenden Ebenen dient lediglich der besseren Erkennbarkeit der Raster. In der Praxis ist mit den entsprechenden Ausgangs-Datensätzen derselbe Erfassungsbereich einer Szene erfasst. Von beiden Rastern sind jeweils vier Rasterelemente als quadratische Bereiche dargestellt. Diese vier Rasterelemente des unten dargestellten zweiten Rasters sind in Fig. 3 mit G₁, G₂, G₃, G₄ bezeichnet. Von dem links hinten in Fig. 3 dargestellten Rasterelement H₁ des ersten Rasters ist eine senkrechte Projektion auf die Ebene des zweiten Rasters dargestellt. Die Projektionsfläche ist wie auch das projizierte Rasterelement quadratisch. Aufgrund der räumlichen Verschiebung (in den beiden Richtungen x, y eines zweidimensionalen, kartesischen Koordinatensystems, das sich in der jeweiligen Rasterebene erstreckt, wie das für die Ebene des ersten, oberen Rasters dargestellte x-y-Koordinatensystem) des ersten Rasters relativ zu dem zweiten Raster liegt die Projektionsfläche mit ihrem Mittelpunkt am gemeinsamen Grenzpunkt der vier dargestellten Rasterelemente des zweiten Rasters. Dadurch ergeben sich in der Projektionsfläche vier gleich große Quadrate als Überlappungs-Teilbereiche, deren Grenzen jeweils durch Grenzen der Rasterelemente der Raster der zwei Ausgangs-Sätze definiert sind. Jedes der Rasterelemente G₁, G₂, G₃, G₄ des zweiten Rasters bildet zwei der rechtwinklig zueinander verlaufenden Grenzen der quadratischen Überlappungs-Teilbereiche. Die anderen beiden Grenzen der quadratischen Überlappungs-Teilbereiche werden durch die Grenzen des projizierten Rasterelements des ersten Rasters definiert. Anders ausgedrückt hat jeder der Überlappungs-Teilbereiche vier Grenzen, nämlich die vier Ränder des Quadrats.

Fig. 4 zeigt das erste Raster und das zweite Raster aus Fig. 3 in Draufsicht, d. h. in der Darstellung der Fig. 3 von oben. Die Rasterelemente des zweiten Rasters sind wieder mit G₁, G₂, G₃, G₄ bezeichnet. Ferner ist die oben unter Bezugnahme auf Fig. 3 beschriebene Projektionsfläche erkennbar, die dem Rasterelement H₁ des ersten Rasters entspricht. Sie setzt sich aus den vier quadratischen Überlappungs-Teilbereichen T_{G1,3}, T_{G2,4}, T_{G3,2}, T_{G4,1} zusammen.

Außerhalb des Rasterelements G₁ ist angedeutet, dass sich durch die vollständige Projektion der beiden Raster aufeinander nicht nur Überlappungs-Teilbereiche für das eine genannte projizierte Rasterelement H₁ ergeben, sondern für alle Rasterelemente beider Raster. Für das Rasterelements G₁ ergibt sich konkret die rechts oben in Fig. 4 dargestellte Aufteilung in vier Überlappungs-Teilbereiche T_{G1,0}, T_{G1,2}, T_{G1,4}, T_{G1,3}. Es ist anzumerken, dass der Überlappungs-Teilbereich T_{G1,3} derselbe Überlappungs-Teilbereich ist, welcher bereits erwähnt wurde. Er befindet sich in der Darstellung der Fig. 4 rechts unten in dem Rasterelement G₁.

Der Funktionswert beispielsweise des Überlappungs-Teilbereichs T_{G1,3} kann unter Berücksichtigung der Funktionswerte der Rasterlemente H₁ des ersten Rasters und G₁ des zweiten Rasters gebildet werden, da der Überlappungs-Teilbereich T_{G1,3} innerhalb dieser beiden Rasterelemente liegt. Wenn beispielsweise der Funktionswert des Rasterelements H₁ höher ist als der Funktionswert des Rasterelements G₁, liegt der Funktionswert des Überlappungs-Teilbereichs T_{G1,3} in dem Bereich dazwischen. Außerdem kann bereits die Aussage getroffen werden, dass sich die Summe der Funktionswerte der anderen innerhalb des Rasterelements H₁ liegenden Überlappungs-Teilbereiche gegenüber dem Funktionswert des Rasterelements H₁ erhöhen muss, damit die Energiebilanz des Rasterelements H₁ erhalten bleibt. Umgekehrt gilt für die anderen innerhalb des Rasterelements G₁ liegenden Überlappungs-Teilbereiche, dass sich deren Summe der Funktionswerte gegenüber dem Funktionswert des Rasterelements G1 erniedrigen muss, damit die Energiebilanz des Rasterelements G₁ erhalten bleibt. Diese Energiebilanz-Erhaltung ist jedenfalls bevorzugtermaßen zu gewährleisten.

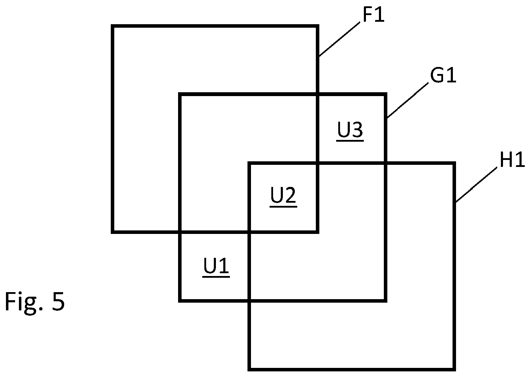

Wie bereits erwähnt ist die Erfindung nicht auf lediglich zwei Ausgangs-Datensätze beschränkt. Ein Beispiel, wie aus den Rastern von drei Ausgangs-Datensätzen ein abgeleitetes örtlich verfeinertes Raster gebildet wird, ist schematisch in Fig. 5 dargestellt. Diese Fig. 5 zeigt von den drei Ausgangs-Datensätzen lediglich jeweils ein Rasterelement F₁, G₁, H₁. Dabei gehört das Rasterelement F₁ zu dem ersten Ausgangs-Datensatz, gehört das Rasterelement G₁ zu dem zweiten Ausgangs-Datensatz und gehört das Rasterelement H₁ zu dem dritten Ausgangs-Datensatz. Es ist erkennbar, dass die Rasterelemente F₁, G₁, H₁ der verschiedenen Ausgangs-Datensätze örtlich gegeneinander verschoben sind, und zwar wie dargestellt vorzugsweise um ein Drittel der Rasterkonstante verschoben. Die Rasterkonstante folgt aus der Größe der Rasterelemente F₁, G₁, H₁ und ist für die drei Ausgangs-Datensätze gleich groß.

Bereits aus der Darstellung von lediglich einem Rasterelement F₁, G₁, H₁ für jeden der Ausgangs-Datensätze in Fig. 5 ist erkennbar, dass durch die Grenzen bzw. Ränder der Rasterelemente F₁, G₁, H₁ Überlappungs-Teilbereiche U₁, U₂, U₃ gebildet werden. Zum Beispiel der Überlappungs-Teilbereich U₂ liegt in den Grenzen aller drei Rasterelemente F₁, G₁, H₁. Zwar liegen die Überlappungs-Teilbereiche U₁, U₃ nur innerhalb der Grenzen eines der drei dargestellten Rasterelemente F₁, G₁, H₁, nämlich innerhalb der Grenzen des Rasterelements G₁, die Grenzen der Überlappungs-Teilbereiche U₁, U₃ sind jedoch bereits eindeutig erkennbar. Wenn die weiteren Rasterelemente der drei AusgangsDatensätze betrachtet würden, ergäbe sich ein regelmäßiges verfeinertes Raster der Überlappungs-Teilbereiche, die alle quadratisch sind und die Größe der in Fig. 5 dargestellten Überlappungs-Teilbereiche U₁, U₂, U₃ haben.

Im Folgenden wird auf die Modellierung der Beziehung zwischen Ausgangs-Datensätzen unterschiedlicher geometrische Auflösung eingegangen. Die folgende Funktion ${A}_{k} \left(F\right) : = D \left(B\left({W}_{k}\left(F\right)\right)\right)$ beschreibt die Ableitung eines k-ten niedrig aufgelösten Datensatzes aus einem zugrundeliegenden hoch aufgelöstem Datensatz F. Die individuelle geometrische Transformation, um einen Datensatz auf eine festgelegte Referenzebene zu projizieren, wird mit der Funktion *Wₖ* angegeben. Die Funktion B modelliert die Unschärfe der Daten, die z. B. aus dem Design des optischen Systems oder Bewegungen resultieren. Eine gängige Wahl für B ist beispielsweise eine Faltung der Daten mit einem Gauß-Filter. Mittels der Funktion D wird ein Downsampling der hochaufgelösten Daten beschrieben. Ein niedrig aufgelöster Datensatz f̃*ₖ* ergibt sich aus einem hoch aufgelösten Datensatz F entsprechend ${{f}^{˜}}_{k} : = {A}_{k} \left(F\right) + {n}_{k} ,$ **wobei mit** *nₖ* das Rauschen des Aufnahmeprozesses modelliert wird.

Grundidee des Algorithmus ist es, einen hochaufgelösten Datensatz zu bestimmen, dessen zugehörige niedrig aufgelöste Datensätze *f̃* die bestmögliche Annäherung an die Datensätze *fₖ* (gegebene niedrig aufgelöste Datensätze) darstellen, während gleichzeitig mittels einer Glattheitsbedingung für den hoch aufgelösten Datensatz F die eindeutige Lösbarkeit des Problems gewährleistet wird. Der gesuchte hoch aufgelöste Datensatz F wird mittels eines iterativen Algorithmus bestimmt. Zu Beginn erfolgt eine beliebige Initialisierung des hoch aufgelösten Datensatzes F. In jeder Iteration werden dann, vom aktuell vorliegenden hoch aufgelösten Datensatz F die k zugehörigen, niedrig aufgelösten Datensätze *f̃ₖ* abgeleitet. Anschließend wird der hoch aufgelöste Datensatz F auf Basis der Abweichungen zwischen den Datensätzen *fₖ* und *f̃ₖ* und der Unstetigkeit des aktuellen hochaufgelösten Datensatzes F angepasst. Mit jeder Iteration findet eine fortlaufende Minimierung der beiden genannten Punkte (Abweichungen und Unstetigkeit) statt. Hierbei ist gewährleistet, dass die bestmögliche Lösung F gefunden wird. Für diese gilt auch eine qualitativ hochwertige Annährung an das Prinzip der Energieerhaltung, die durch den Abgleich zwischen den *fₖ* und *f̃ₖ* sichergestellt ist.

## Patentansprüche

1. Computerimplementiertes Verfahren zum Verbessern einer geometrischen Auflösung von Fernerkundungsdaten,
- wobei zumindest zwei Ausgangs-Sätze von Fernerkundungsdaten einer Szene empfangen werden oder vorliegen,
- wobei jeder der Ausgangs-Sätze Funktionswerte für zugeordnete Rasterelemente (G₁, G₂, G₃, G₄, H₁) eines geometrischen Rasters einer Erfassung der Szene aufweist und wobei die Funktionswerte jeweils von der Szene ausgehender und in dem zugeordneten Rasterelement (G₁, G₂, G₃, G₄, H₁) einfallender Strahlung entsprechen,
- wobei die geometrischen Raster der zumindest zwei Ausgangs-Sätze gegeneinander versetzt sind, sodass in einem Überlappungsbereich der geometrischen Raster der zumindest zwei Ausgangs-Sätze eine Vielzahl von Überlappungs-Teilbereichen (U₁, U₂, U₃) gebildet ist, aus denen sich der Überlappungsbereich zusammensetzt, deren Grenzen jeweils durch Grenzen der Rasterelemente (G₁, G₂, G₃, G₄, H₁) der zumindest zwei Ausgangs-Sätze definiert sind und deren geometrische Größe kleiner ist als die geometrische Größe der Rasterelemente (G₁, G₂, G₃, G₄, H₁) der zumindest zwei Ausgangs-Sätze,
- für die Vielzahl von Überlappungs-Teilbereiche jeweils ein abgeleiteter Funktionswert gebildet wird, der aus den Funktionswerten derjenigen Rasterelemente (G₁, G₂, G₃, G₄, H₁) der zumindest zwei Ausgangs-Sätze gebildet wird, deren Grenzen den jeweiligen Überlappungs-Teilbereich (U₁, U₂, U₃) definieren,
- die abgeleiteten Funktionswerte derart gebildet werden, dass die folgende Bedingung erfüllt ist: ein Flächenintegral der abgeleiteten Funktionswerte über den Überlappungsbereich ist für jeden der Ausgangs-Sätze jeweils gleich einem Flächenintegral der Funktionswerte der Rasterelemente (G₁, G₂, G₃, G₄, H₁) des Ausgangs-Satzes und
- ein abgeleiteter Satz von Fernerkundungsdaten ausgegeben wird, der durch die Überlappungs-Teilbereiche und die abgeleiteten Funktionswerte definiert ist.

2. Verfahren nach Anspruch 1, wobei die in Anspruch 1 genannte Bedingung durch eine iterative Vorgehensweise bei der Bildung der abgeleiteten Funktionswerte für die Überlappungs-Teilbereiche (U₁, U₂, U₃) eingehalten wird.

3. Verfahren nach Anspruch 1 oder 2, wobei eine physikalische Energiebilanzierung vorgenommen wird mit dem Bilanzierungsziel, die abgeleiteten Funktionswerte derart zu bilden, dass entsprechend dem abgeleiteten Satz von Fernerkundungsdaten in den geometrischen Bereichen der einzelnen Rasterelemente (G₁, G₂, G₃, G₄, H₁) der geometrischen Raster von allen der zumindest zwei Ausgangs-Sätze jeweils dieselbe Strahlungsenergie oder Strahlungsleistung aufgetroffen ist wie gemäß dem jeweiligen Ausgangs-Satz, wobei durch eine iterative Vorgehensweise bei der Bildung der abgeleiteten Funktionswerte das Bilanzierungsziel angenähert wird.

4. Verfahren nach einem der Ansprüche 1 bis 3, wobei die Funktionswerte der Ausgangs-Sätze in dem zugeordneten Rasterelement einfallender Strahlung in demselben Wellenlängenbereich der Strahlung entsprechen.

5. Computerprogramm, aufweisend Befehle, die bei der Ausführung des Programms durch einen Computer diesen veranlassen, oder durch ein Computernetz dieses veranlassen, das Verfahren nach einem der Ansprüche 1 bis 4 auszuführen.

6. Anordnung zur elektronischen Datenverarbeitung zur Ausführung des Verfahrens zum Verbessern einer geometrischen Auflösung von Fernerkundungsdaten nach einem der Ansprüche 1 bis 4,
- wobei die Anordnung ausgestaltet ist, zumindest zwei Ausgangs-Sätze von Fernerkundungsdaten einer Szene zu empfangen oder zu verarbeiten,
- wobei jeder der Ausgangs-Sätze Funktionswerte für zugeordnete Rasterelemente (G₁, G₂, G₃, G₄, H₁) eines geometrischen Rasters einer Erfassung der Szene aufweist und wobei die Funktionswerte jeweils von der Szene ausgehender und in dem zugeordneten Rasterelement (G₁, G₂, G₃, G₄, H₁) einfallender Strahlung entsprechen,
- wobei die geometrischen Raster der zumindest zwei Ausgangs-Sätze gegeneinander versetzt sind, sodass in einem Überlappungsbereich der geometrischen Raster der zumindest zwei Ausgangs-Sätze eine Vielzahl von Überlappungs-Teilbereichen (U₁, U₂, U₃) gebildet ist, aus denen sich der Überlappungsbereich zusammensetzt, deren Grenzen jeweils durch Grenzen der Rasterelemente (G₁, G₂, G₃, G₄, H₁) der zumindest zwei Ausgangs-Sätze definiert sind und deren geometrische Größe kleiner ist als die geometrische Größe der Rasterelemente (G₁, G₂, G₃, G₄, H₁) der zumindest zwei Ausgangs-Sätze,
- wobei die Anordnung eine Bildungseinrichtung aufweist, die ausgestaltet ist für die Vielzahl von Überlappungs-Teilbereiche (U₁, U₂, U₃) jeweils einen abgeleiteten Funktionswert zu bilden, der aus den Funktionswerten derjenigen Rasterelemente (G₁, G₂, G₃, G₄, H₁) der zumindest zwei Ausgangs-Sätze gebildet wird, deren Grenzen den jeweiligen Überlappungs-Teilbereich (U₁, U₂, U₃) definieren,
- die Bildungseinrichtung ausgestaltet, die abgeleiteten Funktionswerte derart zu bilden, dass die folgende Bedingung erfüllt ist: ein Flächenintegral der abgeleiteten Funktionswerte über den Überlappungsbereich ist für jeden der Ausgangs-Sätze jeweils gleich einem Flächenintegral der Funktionswerte der Rasterelemente (G₁, G₂, G₃, G₄, H₁) des Ausgangs-Satzes und
- wobei die Anordnung ausgestaltet ist, einen abgeleiteten Satz von Fernerkundungsdaten auszugeben, der durch die Überlappungs-Teilbereiche (U₁, U₂, U₃) und die abgeleiteten Funktionswerte definiert ist.

## Claims

1. A computer-implemented method for improving a geometric resolution of remote sensing data,
- wherein at least two initial sets of remote sensing data of a scene are received or are present,
- wherein each of the initial sets comprises functional values for associated grid elements (G₁, G₂, G₃, G₄, H₁) of a geometric grid of a capture of a scene, and wherein the functional values each correspond to radiation that originates from the scene and is incident in the associated grid element (G₁, G₂, G₃, G₄, H₁),
- wherein the geometric grids of the at least two initial sets are offset from one another such that, in an overlap region of the geometric grids of the at least two initial sets, a multiplicity of overlap sub-regions (U₁, U₂, U₃) are formed which make up the overlap region, the boundaries of which are each defined by boundaries of the grid elements (G₁, G₂, G₃, G₄, H₁) of the at least two initial sets and of which the geometric size is less than the geometric size of the grid elements (G₁, G₂, G₃, G₄, H₁) of the at least two initial sets,
- for each of the multiplicity of overlap sub-regions, a derived functional value is formed, which is formed from the functional values of those grid elements (G₁, G₂, G₃, G₄, H₁) of the at least two initial sets of which the boundaries define the respective overlap sub-region (U₁, U₂, U₃),
- the derived functional values are formed such that the following condition is fulfilled: for each of the initial sets, a surface integral of the derived functional values over the overlap region is equal to a surface integral of the functional values of the grid elements (G₁, G₂, G₃, G₄, H₁) of the initial set, and
- a derived set of remote sensing data is output which is defined by the overlap sub-regions and the derived functional values.

2. The method according to claim 1, wherein the condition set out in claim 1 is complied with by means of an iterative process when forming the derived functional values for the overlap sub-regions (U₁, U₂, U₃).

3. The method according to claim 1 or 2, wherein a physical energy balancing is carried out with the balancing target of forming the derived functional values such that, according to the derived set of remote sensing data in the geometric regions of the individual grid elements (G₁, G₂, G₃, G₄, H₁) of the geometric grids of all of the at least two initial sets, the same radiation energy or radiation power as in accordance with the respective initial set has impinged in each case, wherein the balancing target is approached by means of an iterative process when forming the derived functional values.

4. The method according to any one of claims 1 to 3, wherein the functional values of the initial sets correspond to radiation that is incident in the associated grid element in the same wavelength range of the radiation.

5. A computer program comprising commands which, when the program is executed by a computer, or by a computer network, cause said computer or computer network to carry out the method according to any one of claims 1 to 4.

6. An electronic data-processing assembly for carrying out the method for improving a geometric resolution of remote sensing data according to any one of claims 1 to 4,
- wherein the assembly is configured to receive or process at least two initial sets of remote sensing data of a scene,
- wherein each of the initial sets comprises functional values for associated grid elements (G₁, G₂, G₃, G₄, H₁) of a geometric grid of a capture of a scene, and wherein the functional values each correspond to radiation that originates from the scene and is incident in the associated grid element (G₁, G₂, G₃, G₄, H₁),
- wherein the geometric grids of the at least two initial sets are offset from one another such that, in an overlap region of the geometric grids of the at least two initial sets, a multiplicity of overlap sub-regions (U₁, U₂, U₃) are formed which make up the overlap region, the boundaries of which are each defined by boundaries of the grid elements (G₁, G₂, G₃, G₄, H₁) of the at least two initial sets and of which the geometric size is less than the geometric size of the grid elements (G₁, G₂, G₃, G₄, H₁) of the at least two initial sets,
- wherein the assembly comprises a forming device, which is configured to form, for each of the multiplicity of overlap sub-regions (U₁, U₂, U₃), a derived functional value, which is formed from the functional values of those grid elements (G₁, G₂, G₃, G₄, H₁) of the at least two initial sets of which the boundaries define the respective overlap sub-region (U₁, U₂, U₃),
- the forming device is configured to form the derived functional values such that the following condition is fulfilled: for each of the initial sets, a surface integral of the derived functional values over the overlap region is equal to a surface integral of the functional values of the grid elements (G₁, G₂, G₃, G₄, H₁) of the initial set, and
- wherein the assembly is configured to output a derived set of remote sensing data which is defined by the overlap sub-regions (U₁, U₂, U₃) and the derived functional values.

## Revendications

1. Procédé mis en oeuvre par ordinateur destiné à améliorer une résolution géométrique de données de détection à distance,
- dans lequel au moins deux ensembles initiaux de données de détection à distance d'une scène sont reçus ou sont présents,
- dans lequel chacun des ensembles initiaux comprend des valeurs fonctionnelles pour des éléments de grille (G₁, G₂, G₃, G₄, H₁) associés d'une grille géométrique d'une capture d'une scène, et dans lequel les valeurs fonctionnelles correspondent chacune à des rayonnements qui ont pour origine la scène et sont incidents dans l'élément de grille (G₁, G₂, G₃, G₄, H₁) associé,
- dans lequel les grilles géométriques des au moins deux ensembles initiaux sont décalées l'une par rapport à l'autre de telle sorte que, dans une région de superposition des grilles géométriques des au moins deux ensembles initiaux, une multiplicité de sous-régions de superposition (U₁, U₂, U₃) qui constituent la région de superposition sont formées, les limites de ces dernières étant chacune définies par des limites des éléments de grille (G₁, G₂, G₃, G₄, H₁) des au moins deux ensembles initiaux et pour lesquelles la taille géométrique est inférieure à la taille géométrique des éléments de grille (G₁, G₂, G₃, G₄, H₁) des au moins deux ensembles initiaux,
- pour chacune de la multiplicité de sous-régions de superposition, une valeur fonctionnelle dérivée est formée, laquelle est formée à partir des valeurs fonctionnelles des éléments de grille (G₁, G₂, G₃, G₄, H₁) des au moins deux ensembles initiaux dont les limites définissent la sous-région de superposition (U₁, U₂, U₃) respective,
- les valeurs fonctionnelles dérivées sont formées de telle sorte que la condition suivante est remplie : pour chacun des ensembles initiaux, une intégrale de surface des valeurs fonctionnelles dérivées sur la région de superposition est égale à une intégrale de surface des valeurs fonctionnelles des éléments de grille (G₁, G₂, G₃, G₄, H₁) de l'ensemble initial, et
- un ensemble dérivé de données de détection à distance qui est défini par les sous-régions de superposition et les valeurs fonctionnelles dérivées est fourni.

2. Procédé selon la revendication 1, dans lequel la condition définie dans la revendication 1 est remplie au moyen d'un processus itératif lors de la formation des valeurs fonctionnelles dérivées pour les sous-régions de superposition (U₁, U₂, U₃).

3. Procédé selon la revendication 1 ou 2, dans lequel l'équilibrage d'énergie physique est mis en œuvre avec la cible d'équilibrage consistant à former les valeurs fonctionnelles dérivées de telle sorte que, selon l'ensemble dérivé de données de détection à distance dans les régions géométriques des éléments de grille (G₁, G₂, G₃, G₄, H₁) individuels des grilles géométriques de la totalité des au moins deux ensembles initiaux, la même énergie de rayonnement ou puissance de rayonnement que celle conforme à l'ensemble initial respectif est incidente dans chaque cas, dans lequel la cible d'équilibrage est approchée au moyen d'un processus itératif lors de la formation des valeurs fonctionnelles dérivées.

4. Procédé selon l'une quelconque des revendications 1 à 3, dans lequel les valeurs fonctionnelles des ensembles initiaux correspondent à des rayonnements qui sont incidents dans l'élément de grille associé dans la même plage de longueur d'onde des rayonnements.

5. Programme informatique comprenant des instructions qui, lorsque le programme est exécuté par un ordinateur, ou par un réseau informatique, amènent ledit ordinateur ou réseau informatique à mettre en œuvre le procédé selon l'une quelconque des revendications 1 à 4.

6. Ensemble de traitement de données électroniques destiné à mettre en œuvre le procédé d'amélioration d'une résolution géométrique de données de détection à distance selon l'une quelconque des revendications 1 à 4,
- dans lequel l'ensemble est configuré pour recevoir ou traiter au moins deux ensembles initiaux de données de détection à distance d'une scène,
- dans lequel chacun des ensembles initiaux comprend des valeurs fonctionnelles pour des éléments de grille (G₁, G₂, G₃, G₄, H₁) associés d'une grille géométrique d'une capture d'une scène, et dans lequel les valeurs fonctionnelles correspondent chacune à des rayonnements qui ont pour origine la scène et sont incidents dans l'élément de grille (G₁, G₂, G₃, G₄, H₁) associé,
- dans lequel les grilles géométriques des au moins deux ensembles initiaux sont décalés l'une par rapport à l'autre de telle sorte que, dans une région de superposition des grilles géométriques des au moins deux ensembles initiaux, une multiplicité de sous-régions de superposition (U₁, U₂, U₃) qui constituent la région de superposition sont formées, les limites de ces dernières étant chacune définies par des limites des éléments de grille (G₁, G₂, G₃, G₄, H₁) des au moins deux ensembles initiaux et pour lesquelles la taille géométrique est inférieure à la taille géométrique des éléments de grille (G₁, G₂, G₃, G₄, H₁) des au moins deux ensembles initiaux,
- dans lequel l'ensemble comprend un dispositif de formation, qui est configuré pour former, pour chacune de la multiplicité de sous-régions de superposition (U₁, U₂, U₃), une valeur fonctionnelle dérivée, qui est formée à partir des valeurs fonctionnelles des éléments de grille (G₁, G₂, G₃, G₄, H₁) des au moins deux ensembles initiaux dont les limites définissent la sous-région de superposition (U₁, U₂, U₃) respective,
- le dispositif de formation est configuré pour former les valeurs fonctionnelles dérivées de telle sorte que la condition suivante est remplie : pour chacun des ensembles initiaux, une intégrale de surface des valeurs fonctionnelles dérivées sur la région de superposition est égale à une intégrale de surface des valeurs fonctionnelles des éléments de grille (G₁, G₂, G₃, G₄, H₁) de l'ensemble initial, et
- dans lequel l'ensemble est configuré pour fournir un ensemble dérivé de données de détection à distance qui est défini par les sous-régions de superposition (U₁, U₂, U₃) et les valeurs fonctionnelles dérivées.
